# EUROPEAN PATENT APPLICATION

(11) **EP 2 112 857 A1**
(43) Date of publication of application: **28.10.2009**
(21) Application number: 08154853.9
(22) Date of filing: 21.04.2008
(51) Int. Cl.: H04W 84/00

(54) **Service registration in cellular network**

(71) Applicant: Nokia Siemens Networks Oy, 02610 Espoo (FI)
(72) Inventor: Albinus, Christoph, 13629, Berlin (DE); Bergman, Ola, 74022, Baelinge (SE); Marx, Hans-Jürgen, 82319, Starnberg (DE); Pabst, Dorothea, 80637, Munich (DE); Qian, Faqiang, 1210, Wien (AT)
(74) Representative: Niemi, Hakan Henrik

(57) **Abstract**

A network element of a cellular network, comprising means for processing (582) registration information to register a mobile station (540) with a first service relating to the cellular network, means for processing (584) a service request relating to a second service of the cellular network to be transmitted to the mobile station (540) registered with the first service, means for processing (586) registration information to register the mobile station (540) with the second service if the mobile station responds positively to the service request relating to the second service, and means for processing (588) one or more subsequent service requests relating to the second service to be transmitted to the mobile station (540) registered with the second service.

## Description

### FIELD

The invention relates to registration in a cellular network, specifically registration of a mobile station with services offered by the cellular network.

### BACKGROUND

GSM-R (Global System for Mobile Communications - Railways) is a radio network configuration specifically designed to meet the demands of railways. Compared to normal GSM systems, GSM-R puts specific weight to applications such as communication in high speeds, coverage inside tunnels, and high handover success rates, for instance.

A further application of GSM-R is the emergency call application called REC (Railway Emergency Call). An evolution of REC, called eREC (enhanced Railway Emergency Call), aims to improve the existing REC system.

eREC applies Voice Group Call Service (VGCS) as a basis. Mobile stations may be registered to the eREC system, and their location may be tracked constantly by using a sector identity parameter, for instance. Emergency calls may be established as a group communication service sector specifically.

There is a need to provide a simple and effective mechanism for registering mobile stations to the eREC system. There is also a need to keep the system complexity at an appropriate level in inter-state handovers, for instance.

### SUMMARY

In one aspect, there is provided a network element of a cellular network, comprising means for processing registration information to register a mobile station with a first service of the cellular network. The network element comprises means for processing a service request relating to a second service of the cellular network to be transmitted to the mobile station registered with the first service, means for processing registration information to register the mobile station with the second service if the mobile station responds positively to the service request relating to the second service, and means for processing one or more subsequent service requests relating to the second service to be transmitted to the mobile station registered with the second service.

In another aspect, there is provided a cellular network, comprising means for registering a mobile station with a first service of the cellular network. The cellular network comprises means for transmitting a service request relating to a second service of the cellular network to the mobile station registered with the first service, means for registering the mobile station with the second service if the mobile station responds positively to the service request relating to the second service, and means for transmitting one or more subsequent service requests relating to the second service to the mobile station registered with the second service.

In still another aspect, there is provided a method in a cellular network, comprising processing information for registering a mobile station with a first service of the cellular network. The method comprises processing a service request relating to a second service of the cellular network to be transmitted to the mobile station registered with the first service, processing information for registering the mobile station with the second service if the mobile station responds positively to the service request relating to the second service, and processing one or more subsequent service requests relating to the second service to be transmitted to the mobile station registered with the second service.

In still another aspect, there is provided a computer-readable storage medium encoded with instructions that, when executed by a computer, perform registering of a mobile station with a first service of the cellular network, transmitting a service request relating to a second service of the cellular network to the mobile station registered with the first service, registering the mobile station with the second service if the mobile station responds positively to the service request relating to the second service, and transmitting one or more subsequent service requests relating to the second service to the mobile station registered with the second service.

### DRAWINGS

In the following, the invention will be described in greater detail by means of preferred embodiments with reference to the accompanying drawings, in which
Figure 1 illustrates an embodiment of a radio system;
Figure 2 shows an embodiment of service implementation in a radio system;
Figure 3 shows an embodiment of a method;
Figure 4 shows another embodiment of a method; and
Figure 5 shows an embodiment of an arrangement.

### DESCRIPTION OF EMBODIMENTS

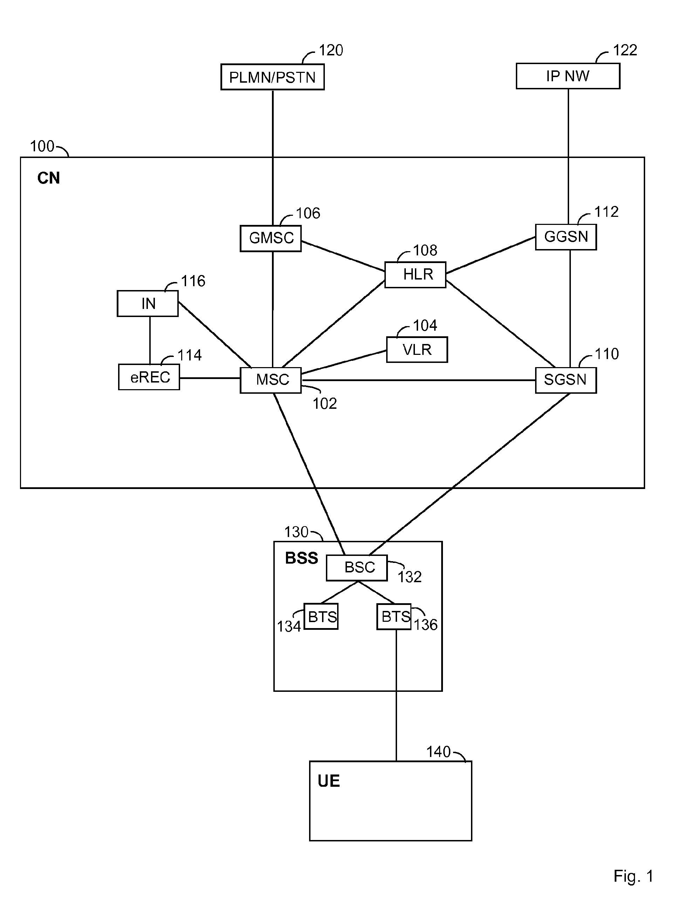

Figure 1 shows a GSM based GSM-R as an example of a radio network, to which the invention may be applied. The invention is not, however, restricted to that system but a person skilled in the art can apply the teaching also to other radio systems containing corresponding characteristics.

The main parts of a radio system are a core network (CN) 100, a base station system 130 and user equipment (UE) 140, which may be, for instance be a mobile phone, a portable computer or a personal digital assistant.

The structure of the core network 100 corresponds to a combined structure of the GSM and GPRS systems. The GSM network elements are responsible for establishing circuit-switched connections, and the GPRS network elements may be responsible for packet-switched connections. A mobile services switching centre (MSC) 102 is the centre point of the circuit-switched side of the core network 100. The tasks of the mobile services switching centre 102 may include switching, paging, user equipment location registration, handover management, collection of subscriber billing information, encryption parameter management, frequency allocation management, and echo cancellation, for instance.

The core network 100 may have a separate gateway mobile services switching centre (GMSC) 106, which takes care of circuit-switched connections between the core network 100 and external networks 120, such as a public land mobile network (PLMN) or a public switched telephone network (PSTN), for instance.

A home location register (HLR) 108 contains a permanent subscriber register, and a visitor location register (VLR) 104 contains roaming information on user equipment 140 in the area of the MSC 102.

A serving GPRS support node (SGSN) 110 may transmit and receive packets with the user equipment 140 via the base station system 130. A gateway GPRS support node (GGSN) 112 is the packet-switched side counterpart to the GMSC 106 of the circuit-switched side. The IP network 122 in Figure 1 may be the Internet, for instance.

Figure 1 also shows an IN (Intelligent Network) node 116. With regard to the GSM-R, the IN may be responsible for registering mobile stations with a functional addressing service, for instance.

An eREC node 114 is illustrated in the figure as a separate entity, although the node may belong to the IN node, as well. In a GSM-R system, the eREC node may carry out registration of the mobile stations with an emergency call service. For this purpose, the eREC node may co-operate with the IN node 116 so as to find out mobile stations registered with functional addressing service.The base station system 130 comprises a base station controller (BSC) 132 and base transceiver stations (BTS) 134, 136. The BSC 132 controls the BTSs 134, 136 by taking care of tasks, such as radio resource management of the base transceiver station 134, 136, inter-cell handovers, frequency control, management of frequency hopping sequences, time delay measurement on the uplink, implementation of the operation and maintenance interface, and power control.

The base transceiver station 134, 136 contains at least one transceiver, which provides one carrier, i.e. eight time slots, i.e. eight physical channels. Typically, one base transceiver station 134, 136 serves one radio cell, but it is also possible to have a solution in which one base transceiver station 134, 136 serves several sectored cells. The diameter of a cell can vary from a few meters to kilometers.

User equipment 140 contains at least one transceiver for establishing a radio link to the base station system 130.

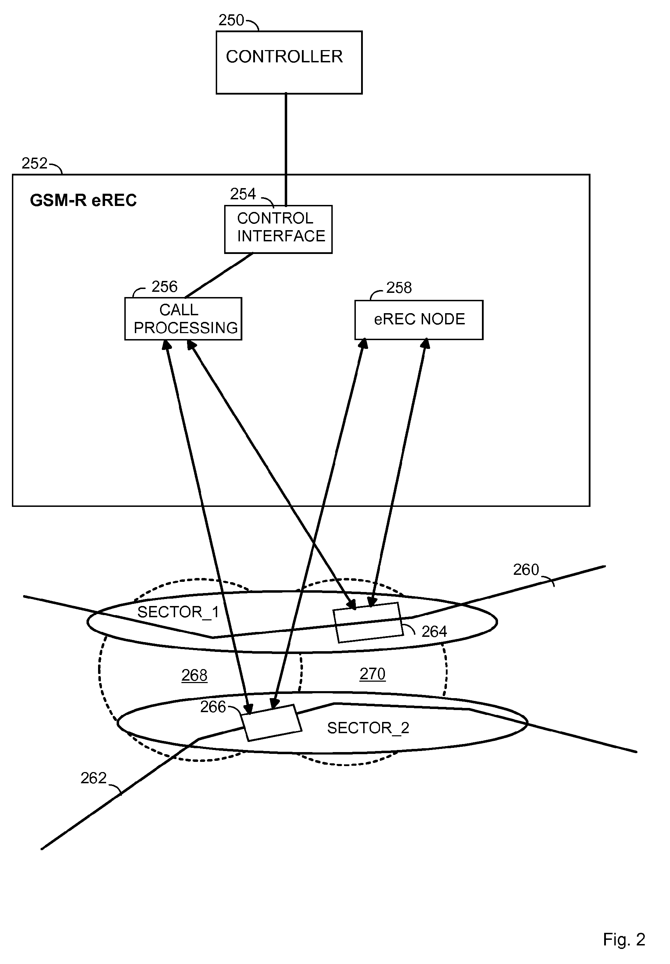

Figure 2 highlights implementation of an enhanced emergency call service in a railway radio system.

The figure shows a controller 250, which refers here to a control station monitoring emergency calls in a railway radio system. In practise, the control station may be operated by people using their GSM-R connected computers for carrying out actions in emergency situations. With reference to Figure 1, the controller may connect to the CN 100 via one of the external networks 120, 122, for instance.

The network implementation of the eREC service may include a control interface 254 towards the controller, which may correspond to one of the external network interfaces 106 or 112 in Figure 1. The emergency call processing unit 256 may belong to either IN or MSC or the functionality therein may be distributed between the two. The eREC node 258 corresponds to the node 114 in Figure 1.

Figure 2 shows two railway lines 260 and 262 that bypass each other at a close distance. The train 264 travels along the railway line 260 and the train 266 along the line 262. At the area where the two railway lines bypass, the lines are so close to each other that they belong to the same radio cells 268 and 270. Thus, on the basis of radio cell identification of an emergency call coming from the cell 268, one would not be able to tell which railway line 260 or 262 the call is coming from.

Therefore, eREC uses an additional location indicator, sector identity. Figure 2 shows two sectors, "Sector_1" and "Sector_2", which are next to each other but cover different railway lines. By associating the sector identity to the emergency call, the emergency call may be directed to all users of the railway line in question.

The eREC service is provided for users who are registered to it and have capability to use it. Some mobile stations using the GSM-R network may and some may not support the eREC functionality. Figure 2 shows arrows between the eREC node 258 and the trains 264, 266, which illustrate a registration procedure between the train and the eREC node. In practise, the registration procedure may be carried out between the train driver's mobile station and the network, for instance.

The eREC node 258 may also be responsible for carrying out sector identity updates in the network highlighted by the arrows between the eREC node and the trains 264, 266. Before the mobile station enters an eREC sector, the mobile receives an update informing the mobile of the new eREC sector identity/identities which is/are applicable in the sector to be entered. The arrow between the call processing unit 256 and the train 266 depicts an emergency call established in an emergency situation. The emergency call may be a VGCS call, for instance. When initiating the call, the train driver of the train 266, for instance, transmits the current sector identity to the network. The network may establish a group call and pass the received sector identity in the downlink. All mobile stations supporting eREC and having their currently stored sector identity matching the sector identity from the network will join the call.

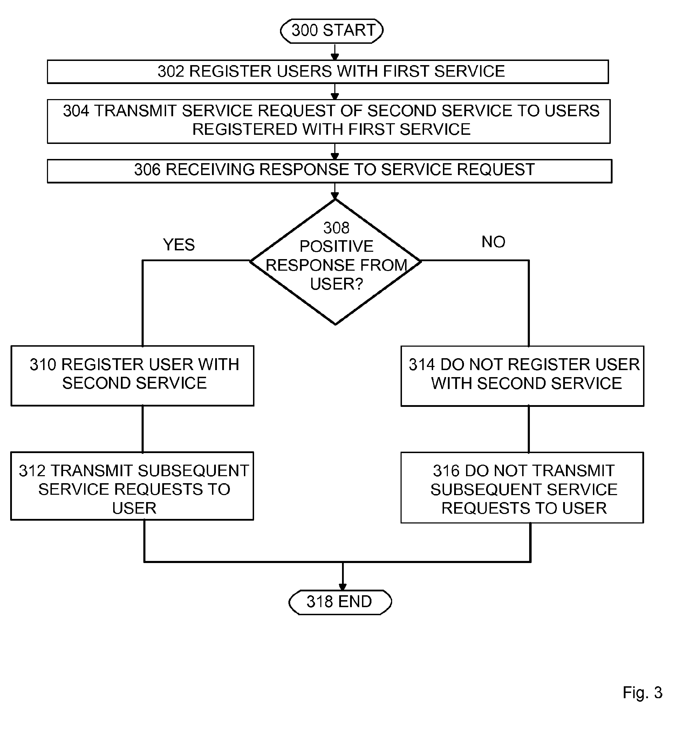

Figure 3 shows an embodiment of a method. The method may be employed in a cellular network including radio cells. The network offers at least two services to mobile stations using the network.

In 302, users, such as mobile stations, are registered with a first service, e.g. functional addressing, in the communication network. A specific registration procedure is applicable for registration of the mobile stations with the first service. In the registration procedure, the MS initiates a registration signal to the network. The network may respond with an acknowledgment signal to acknowledge a successful registration.

In 304, a service request relating to a second service is transmitted to the user who has been registered with the first service. Upon the registration 302 with the first service, the MS is known to the network and the network may issue service requests to the MS.

The request in 304 may be such that the mobile station may have to respond in such a way that the network can determine whether the second service is supported in MS or not. The service request in 304 may be transmitted without specific registration of the user with the second service. That is, the service request may be an application-specific request. In this way, the network may indirectly find out if the MS supports the second service.

In 308, the response is evaluated in the network. If the MS responded positively in 306, the method proceeds to 308. In 308, the network concludes that the mobile station is capable of supporting the second service. The mobile station is correspondingly registered 310 with the second service in the network. Subsequent service requests relating to the second service may then be transmitted 312 to the mobile station registered with the second service.

If the mobile station in 306 responds with an error indication, the evaluation in 308 proceeds to 314, where the network concludes that the mobile station does not support the second service. Subsequent service requests relating to the second service are not sent 316 to such an incapable mobile station.

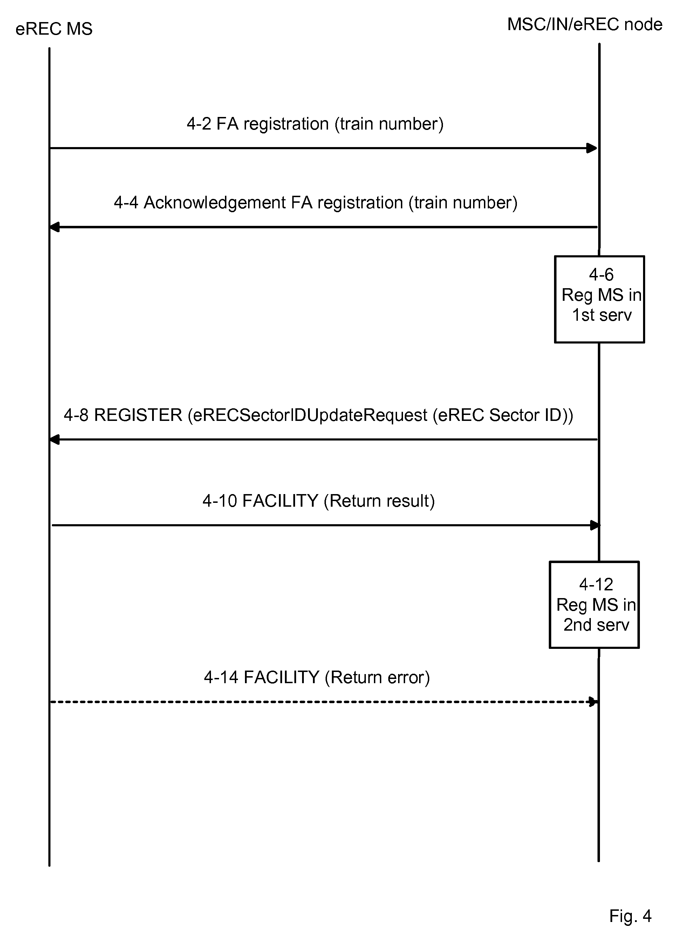

Figure 4 shows another embodiment of the method. The embodiment of Figure 4 shows registration of mobile stations with an eREC service in a cellular network. Two nodes are illustrated in the figure. The communication is between a mobile station (eREC MS), whose eREC capability is investigated, and a network node depicted by MSC/IN/eREC node. Even though MSC/IN/eREC node has been depicted as one node in Figure 4, they may alternatively be in separate nodes.

In 4-2, the MS initiates an FA-registration in a GSM-R network. That is, the train driver may associate his/her mobile station with a train, for instance. In the railway application area, the employees may have daily changing duties: for example, the train drivers may daily change their trains. These employees and also applications may be addressed by a mobile subscriber number and/or functional numbers. Often there is a need to keep track of associations between employees and applications connected to certain mobile subscriber number.

The association may be done in an FFN (Follow-Me Functional Node) realized in the HLR or the IN (Intelligent Network). In the association, functional numbers, such as "train number + function code", may be associated with a certain MSISDN. Then, at the beginning of a job duty, a train driver may associate his MSISDN number to the FN of the train. Until deregistration, a call to the train driver's functional number may be forwarded to the train driver's MSISDN. At the end of the journey, the driver may deregister his MSISDN from the FN of the train. A network controlled forced deregistration may also be applicable.

Thus, when a user (such as the train driver) has registered himself with the train, and thereby an association with his MSISDN and FN of the train has been created, the train driver's mobile station is considered known to the network and is active therein.

In 4-4, the network acknowledges the registration to the MS and registers 4-6 the MS with the FA service.

In 4-8, the network initiates a service request relating to a second service, such as an eREC service, towards an MS that has been successfully registered with the first service. In this train driver example, when the train driver has registered with the first service (FA registration), the network may initiate a service request relating to a second service.

The service request may be transmitted without specific registration of the user to the second service. That is, as a first message relating to the second service, an application-specific request may be transmitted. In the case of eREC, the message may be a sector identity update message, for instance. The message may be a USSD (Unstructured Supplementary Service Data) message standardized in the 3GPP TS 24.090 specification, for instance. Two types of network initiated USSD requests exist, i.e. requests and notifications. In the request, the network initiates the operation by sending a register message to the MS (mobile station). The MS responds by sending a mobile subscriber's response in the return component.

The response is evaluated in the network. If the MS responded positively 4-10 by indicating successful sector update, the network concludes that the mobile station is capable of supporting the second service. The mobile station is correspondingly registered 310 with the second service in the network. Subsequent sector identity update requests may be transmitted to the mobile station registered with the second service.

If the MS is unable to process the request received from the network, it sends an error indication 4-14. If the mobile station responds with an error indication, the network concludes that the mobile station is not eREC capable. Subsequent service requests, such as sector identity update messages, are not sent to such an incapable mobile station.

The eREC registration at the border of two countries A and B may be carried out as follows.

We may assume that the train starts in country A and the mobile station of the train driver is registered with the FA registration and indirect eREC registration. Upon crossing the border, the MS remains FA registered in A until it has successfully FA registered in country B. Upon FA registration in B the MS may have to reset/initiate its eREC sector identity field due to the fact that different numbering systems may be applied in different countries, for instance.

If country B works with eREC, the eREC node in country B may send a sector identity update message according to 4-8. If eREC is not in operation in country B, no sector identity update message is sent. In such a case, the MS may use REC instead of eREC.

Use of REC may also be provided as a fallback solution in a situation where a positive acknowledgment from an MS is lost in the network communication. In such a case the network would regard an eREC capable mobile station as eREC incapable.

In an embodiment, the network might repeat cyclically the network initiated indirect registration procedure 4-8 to 4-12 to the second service. In this way, the MSs that were not registered as eREC capable due to a loss of response, may be correctly registered as such.

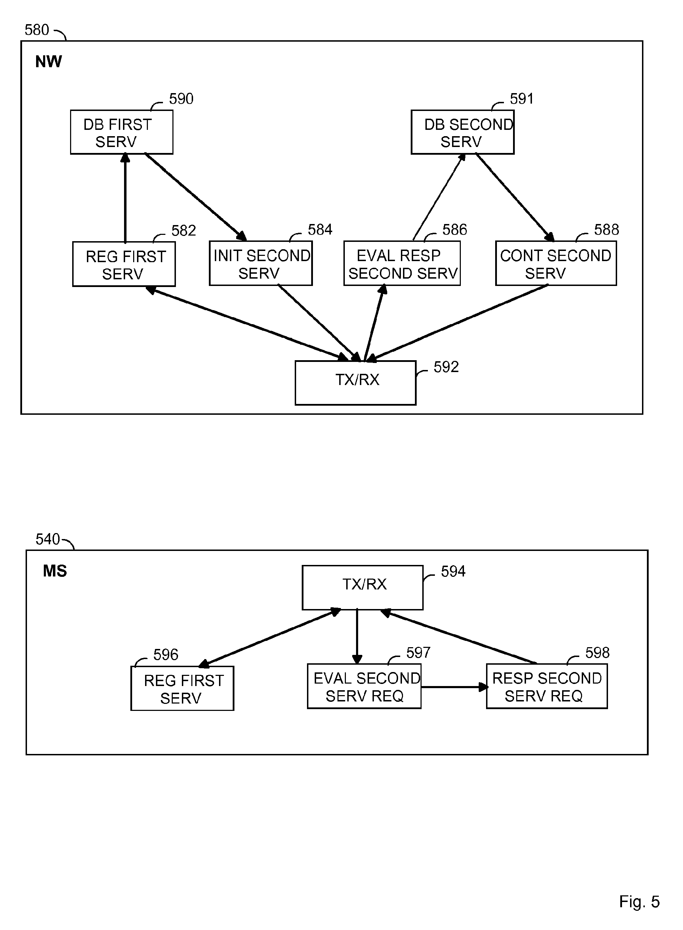

Figure 5 shows an embodiment of an arrangement. Two entities, a network 580 and a mobile station 540 have been illustrated. Each of the entities includes a transceiver, 592 and 594 respectively, to provide a bi-directional radio communication link between the entities.

The network 580 illustrates the implementation in a cellular radio network. The different modules 582 to 591 may be implemented in various places of the network. For instance, the implementation of the module 582 for registration of mobile stations with a first service of the network may include functionality distributed over the IN, MSC, BSC and BTS, for instance. The illustration in Figure 5 is thus a block level illustration showing the different functionality, not limiting the embodiment to where the functionality is actually realized.

The module 582 for registering the mobile stations with a first service may carry out registration signalling with the mobile station 540 so as to register the mobile station with a first service of the network. The first service may be an FA service in a GSM-R network, for instance.

After successful registration signalling, the registration module may register the mobile station into a database 590 configured to store identities of such mobile stations that are registered with the first service. Deregistration of a mobile station with the first service may be carried out with a similar procedure. The registration module 582 and the mobile station may carry out deregistration signalling with each other, and after successful deregistration signalling, the entry of the mobile station may be deleted from the database 590.

The network also includes a module 584 for initiating a service request with regard to a second network service, such as eREC, for instance. In a first embodiment, the registration module 582 indicates a new successful registration with the first service to the initiation module 584. The initiation module 584 may then immediately initiate registration with the second service. In a second embodiment, the initiation module 584 reads periodically from the database 590 such mobile station entries which have been registered with the first service but to which a service request with regard to the second service has not been sent.

The network also includes an evaluation module 586 for evaluation of the response received to the request sent by the module 584. The evaluation module may evaluate whether the mobile station supports the second service or not. If the mobile station supports the second service, the mobile station may be added as a new entry to the database 591, in which data of mobile stations supporting the second service are stored. Although the databases 590 and 591 have been illustrated as separate units in Figure 5, the data stored therein may as well be stored in a single database.

In 588, the network makes a decision about which mobile stations subsequent (other than the first service request) are to be sent to. To accomplish this, the network may read from the second database 591 which mobile stations support the second service. If the mobile station supports the second service, one or more service requests relating to the second service are transmitted to the mobile station. If, however, the mobile station does not support the second service, transmission of subsequent service requests to the mobile station with regard to the second service is omitted, that is such service requests are not sent.

The mobile station includes a registration module 596, which may communicate with the corresponding module 582 in the network. The registration module may carry out signalling needed to registrate the mobile station with the first service, such as FA, for instance. The mobile station also includes an evaluation module 597, which may evaluate a service request relating to the second service, such as a sector identity update request of eREC, for instance.

Depending on whether the mobile station 540 supports eREC or not, a different response may be sent to the network 580 by the response module 598. If the sector identity is successfully updated in the MS 540, this is indicated to the network in a response message. If, however, the sector identity message cannot be processed, an error indication is correspondingly transmitted.

The embodiments may be implemented in a radio network in a centralized or in a distributed manner. For instance, when considering transmission of a service request relating to a second service from the network to the mobile station, several nodes in the cellular network may participate in the transmission. The message flow may be such that the IN generates the message, the MSC and the BSC forward the message to the base station, which then carries out the radio transmission to the MS. The MSC and BSC process the message by forwarding it to the next node and may also carry out some additional processing by changing the transmit format of the message, for instance. That is, between the IN and MSC, the message may have different format than between the MSC and BSC.

In an embodiment, the MSC may be considered as a network element and may carry out steps such as processing registration information to register a mobile station with a first service of the cellular network, processing a service request relating to a second service of the cellular network to be transmitted to the mobile station registered with the first service, processing registration information to register the mobile station with the second service if the mobile station responds positively to the service request relating to the second service, and processing one or more subsequent service requests relating to the second service to be transmitted to the mobile station registered with the second service, where the word "processing" may mean actions such as generating, forwarding, modifying, or a combination of these, for instance.

The service request relating to the second service to be processed may be a request without preceding registration of the mobile station with the second service. In other words, the first message relating to the second service with regard to a certain mobile station may be a service-specific non-registration message. Service specific means that the message is not a registration message but is an application-specific message.

The service request relating to the second service may require the mobile station to respond either positively or negatively. The message is thus such that the mobile station may simply not ignore it but needs to respond somehow.

If a negative response is received from the mobile station to the service request relating to the second service, subsequent service requests relating to the second service may be omitted, that is they are not sent.

The second service may be an enhanced railway emergency call service and the service request relating to the second service may be a sector identity update request.

A method and a computer program product implementing the method and carrying out the functionality of the apparatus may be provided. The embodiments may be implemented by software, hardware, or a combination thereof. The embodiments may be implemented on one or more processors usable in base stations, base station controllers or mobile switching centres, for instance. The functionality presented in the embodiments may be implemented in one or more processing nodes of the core network of Figure 1, for instance.

The disclosed functionality in various embodiments may be implemented by way of a computer program product encoding a computer program of instructions for executing a computer process of the above-described method. The computer program product may be implemented on a computer program distribution medium. The computer program distribution medium may be any of the known ways of distributing software, such as a computer readable medium, a program storage medium, a record medium, a computer readable memory, a computer readable software distribution package, a computer readable signal, a computer readable telecommunication signal, and a computer readable compressed software package. Alternatively, part of the functionality may be implemented by hardware, such as ASIC (Application Specific Integrated Circuit) or by a combination of hardware and software.

It will be obvious to a person skilled in the art that, as technology advances, the inventive concept can be implemented in various ways. The invention and its embodiments are not limited to the examples described above but may vary within the scope of the claims.

## Claims

1. A network element of a cellular network, comprising:
means for processing (582) registration information to register a mobile station (540) with a first service of the cellular network, **characterized by**
means for processing (584) a service request relating to a second service of the cellular network to be transmitted to the mobile station (540) registered with the first service;
means for processing (586) registration information to register the mobile station (540) with the second service if the mobile station (540) responds positively to the service request relating to the second service; and
means for processing (588) one or more subsequent service requests relating to the second service to be transmitted to the mobile station (540) registered with the second service.

2. A network element according to claim 1, **characterized in that** the network element comprises means for processing (584) a service request relating to the second service without preceding registration of the mobile station (540) with the second service.

3. A network element according to claim 1, **characterized in that** the network element comprises means for processing (584) a service-specific non-registration request relating to the second service as a first message relating to the second service to the mobile station.

4. A network element according to claim 1, **characterized in that** network element comprises means for processing (584) a service request relating to the second service, the request requiring the mobile station (540) to respond either positively or negatively.

5. A network element according to claim 1, **characterized in that** the network element comprises means for processing (586) a negative response from the mobile station (540) to the service request; and
means for omitting (588) processing of further service requests relating to the second service to a mobile station (540) that has responded negatively to the service request.

6. A network element according to claim 1, **characterized in that** the second service is an enhanced railway emergency call service and the service request relating to the second service includes a sector identity update request.

7. A cellular network, comprising:
means for registering (582, 590) a mobile station (540) with a first service of the cellular network, **characterized by**
means for transmitting (584) a service request relating to a second service of the cellular network to the mobile station (540) registered with the first service;
means for registering (586, 591) the mobile station (540) with the second service if the mobile station (540) responds positively to the service request relating to the second service; and
means for transmitting (588) one or more subsequent service requests relating to the second service to the mobile station (540) registered with the second service.

8. A method in a cellular network, comprising:
processing (302) information for registering a mobile station with a first service of the cellular network, **characterized by**
processing (304) a service request relating to a second service of the cellular network to be transmitted to the mobile station registered with the first service;
processing (310) information for registering the mobile station with the second service if the mobile station responds positively to the service request relating to the second service; and
processing (312) one or more subsequent service requests relating to the second service to be transmitted to the mobile station registered with the second service.

9. A method according to claim 8, **characterized by** processing (304) the service request relating to the second service for transmission without preceding registration of the mobile station with the second service.

10. A method according to claim 8, **characterized by** processing (304) a service-specific non-registration request as a first message relating to use of the second service at the mobile station.

11. A method according to claim 8, **characterized by** processing (304) a service request relating to the second service requiring the mobile station to respond either positively or negatively.

12. A method according to claim 8, **characterized by** processing (314) a negative response from the mobile station to the service request relating to the second service;
omitting (316) processing of further service requests relating to the second service to a mobile station responding negatively to the service request.

13. A method according to claim 8, **characterized in that** the second service is an enhanced railway emergency call service and the service request relating to the second service includes a sector identity update request.

14. A computer-readable storage medium encoded with instructions that, when executed by a computer, perform:
registering (302) a mobile station with a first service of the cellular network, **characterized by**
transmitting (304) a service request relating to a second service of the cellular network to the mobile station registered with the first service;
registering (310) the mobile station with the second service if the mobile station responds positively to the service request relating to the second service; and
transmitting (312) one or more subsequent service requests relating to the second service to the mobile station registered with the second service.
